# EUROPEAN PATENT APPLICATION

(11) **EP 2 815 655 A1**
(43) Date of publication of application: **24.12.2014**
(21) Application number: 13462007.9
(22) Date of filing: 08.11.2013
(51) Int. Cl.: A23L 2/38, A23L 2/54, A23L 2/56, C12G 1/06, C12G 1/08, C12G 3/04, C12G 3/06, C12G 3/08, B67C 3/06

(54) **Process for the production of a bottled drink mixture.**

(30) Priority: 30.04.2013 HU 1300272
(71) Applicant: Gabor Laszlo, Vasuta, 1014 Budapest (HU)
(72) Inventor: Gabor Laszlo, Vasuta, 1014 Budapest (HU)
(74) Representative: Medgyesi, Mónika

(57) **Abstract**

Thanks to the process as per the invention, a bottled drink mix is produced, from the outset, out of grape wine having a CO₂ content of 2 g/l, drinking water and carbon dioxide, without any other additives. The drinking water cooled down to 8 deg C or the drinking water and grape wine mix separately, or after saturating and resting it, is introduced into bottles, which are kept under pressure until the liquid comes to a rest and are finally de-stressed and sealed.

## Description

The subject of the invention is the process that produces a bottled drink mixture consisting of grape wine, drinking water and carbon dioxide.

People have been drinking wine for thousands of years, and its consumption in a form diluted with spring water was perhaps even more widespread as far back as ancient times and in the Middle Ages. In fact, in areas where the water was of poor quality, even children drank wine strongly diluted with water, due to the disinfecting effect attributed to the wine. In the 19th century, the habit of drinking wine diluted with water containing carbonic acid began to spread. This is the origin of the wine spritzer that is known by several other names, depending on the mixing ratio. Even today, the wine spritzer is still made at the point of sale, immediately before it is consumed. To make it, there must be soda water available; the various types of bottled mineral water that are very popular nowadays are not considered suitable for this purpose. The soda water may be home-made or it can be bought in bottles that can be refilled/refunded. The wines and juices of reduced alcohol content sold in bottles have similarly refreshing qualities. One method of producing them is the de-alcoholising process of partial distillation, which, in turn, has an adverse impact on the useful ingredients (acids, polyphenols and various compounds with antioxidising effects). A more material structure-saving method is also known, e. g. the one presented by the Hungarian patent number P0400260 entitled "Process for producing non-alcoholic wine out of wine, for producing non-alcoholic fruit and/or medical plant wine out of fruit wine and/or medicinal plant wine by adopting membrane separation process. The light drink produced, containing just a few per cent of alcohol, despite the comfort and long life ensured by bottling, still represents a different flavour that cannot win over wine spritzer fans. There is also a procedure where an alcohol-containing drink mix that is suitable for bottling (e. g. WO9603493 MIXTURE AND PACKAGING OF GRAPE DERIVATIVES, CARBON DIOXIDE AND WATER; 193411 "Process for producing juice containing infusion" and 215716 "Storable drink containing carbonic acid, of refreshing impact, and the process for producing it") is produced by adopting various sorts of heat treatment and by using various additives (sweeteners, fruit concentrate, acids, essences, water and carbon dioxide). Such processes, due to the additives, also give a flavour that is different to that of the traditional wine spritzer.

It can be said that there would be a demand for a light soft drink requiring no special equipment for its production and consumption, which provides the same experience of flavour as a freshly mixed wine spritzer. However, it is known that the traditional wine spritzer, even if placed in an enclosed vessel, loses its enjoyment value.

Our goal is to develop a bottled light, alcoholic drink containing soda water, which can be kept, which is, however, free from any other additives. By making this traditional drink available in this format, new markets, fields of application and, in fact, consumption habits can be generated.

Our concept is based on the recognition that the new wines, due to their fermentation, contain CO₂ to a concentration of approx. 2 g/l, which we found more suitable for use and for producing a long-lasting wine spritzer.

The process used in the invention produces a bottled drink mix that consists of grape wine, 10-90, preferably, 60 percent by volume, of drinking water and carbon dioxide. During the process, first the drinking water is saturated at maximum 8 deg C to a CO₂ content of at least 10 g/l, a bottle is filled with grape wine, which has a CO₂ content of 2 g/l, at 8 to 10 deg C, and, after pre-stressing the bottle with CO₂, the saturated drinking water is added to the contents of the bottle, which is then sealed.
We also consider to be preferable a process that uses special filling nozzles for filling the bottles with grape wine. Using an additional advantageous variation of the process, the grape wine is domesticated and saturated in a tank with a cubic capacity corresponding to the number of bottles to be filled and to the cubic capacity of the bottles, and then the drink mix is rested and finally bottled.

In the first step necessary for the process soda water must be produced. The ingredient used in the drink mix may only be water permitted by the health authority. Water coming from the municipal water supply network, depending on its current physical state and chemical composition, has to be filtered by water treatment installations, which may be filters, softeners, degasifiers, de-ironers, de-manganesers or coolers. From the point of view of soda water production, we can consider water of 0 to 15 deg GH as soft and that of 15 to 25 degGH as hard. Using water of such composition, soda water of good quality can still be made if the temperature of the water is not more than 13 to 15 deg C. Water that has been suitably treated and carbon dioxide of food standard quality and regulated pressure are led into a saturating machine, which can have a horizontal cylindrical mixing blade, vertical cylindrical pulveriser or be of another design. For protection against micro-organisms and to obtain the usual flavour effect, the water must be saturated to a CO₂ content of at least 10 g/l. If required, it is advisable to cool the water down to below 8 deg C, so that the desired gas content can be achieved under a lower pressure. With the rise of the water temperature, the water's carbon dioxide absorbing capacity decreases, while, with the increase in the partial pressure of the gas (actually the pressure of the CO₂ gas above the water), the water's carbon dioxide absorbing capacity increases, and the speed of the saturation process depends on the contact surface between gas and air. The increase in the CO₂ partial pressure is possible not only by increasing the absolute pressure but also by previously removing other gases (oxygen, methane, chlorine etc.) contained in the liquid. In addition, the removal of the oxygen also reduces the chance of oxidation of the drink mix.

Before use, it is advisable to clarify the other main ingredient of the drink mix, i. e. the grape wine and to stabilise its acid content. The mixing ratio of water and grape wine may vary, in relation to the desired alcoholic content and flavour, in a wide range (from 1:9 to 9: 1), depending on local habits, however, the most popular is the big wine spritzer, which, if contained in a 0.5 litre bottle, is a mixture of 2 decilitres of wine and 3 decilitres of water, thus, we also recommend adopting mainly this ratio and cubic capacity for bottling.

As regards the variety of grape wine used, we strongly recommend the Italian Riesling and Blue Franc rosé wines on condition that they have a titratable acid content of at least 5% and an alcohol content of at least 11 % (v/v) and preferably with a CO₂ content of 2 g/l. In the new wines, this level develops after their fermentation, which, later on, as a rule naturally or through their deliberate treatment, diminishes, since soda water above a value of 1 g/l can be recognised even in the flavour of the wine, and, in certain wine varieties, the usual CO₂ level to be adjusted varies between 0.1 and 1.8 g/l.
In filling the bottles, as a first step, an adequate quantity of grape wine containing CO₂ of 2 g/l, having a temperature set to between 8 and 10 degC, is introduced into the prepared bottles. For use as a bottle, of course all pressurised vessels of not more than 10 litres, suitable for storing alcoholic drinks used commercially, are suitable, as those familiar with the trade know. Following this, the bottle filled with grape wine is first pre-stressed with CO₂ gas through the same filling nozzle or, moving forward in the filling line, through another filling nozzle used for filling with saturated water, and then saturated water is dispensed into the bottles. Thereafter, the pressure has to be maintained until the liquid comes to a rest, and then the liquid is de-stressed and finally the bottle is sealed. The alcoholic content of the ready-made mix, at the recommended mixing ratio, is 4.5 to 5%, and an overpressure of 2.6 bar develops in the bottle, in the space left free intentionally above the drink mix. After sealing, the usual operations (e.g. labelling, dating, foil-wrapping) corresponding to the bottle type can be carried out; in the case of PET bottles and glass bottles, it is advisable to use a double-lock screw cap for sealing.
Using another advantageous variation, the drinking water and the grape wine are domesticated and saturated in a tank with a cubic capacity corresponding to the number of bottles to be filled and to the cubic capacity of the bottle. It is advisable to use a tank serving for domestication that corresponds to the cubic capacity of a great number of bottles and, in continuous operation, it is useful if several such tanks serve one automatic filling dispenser. Before filling, the drink mix is rested in the tanks.

By adopting the proposed process, through the CO₂ content of 2 g/l of the grape wine ingredient, we have been able to bottle the wine spritzer without using any other additives, and thereby, the market for Hungarian wine has been expanded by a new variety of light alcoholic drink that can be bought ready-mixed. The fact that additives are not used increases the naturalness of the drink mix.

Thanks to this process, keeping the bottled wine spritzer at a temperature of 12 deg C, maintains its quality even for one year but, even one day after opening and resealing, it keeps its sparkling feature a pleasant, refreshing flavour.

## Claims

1. The process serves to produce a bottled drink mix that consists of grape wine, 10-90, preferably 60 percent by volume, of drinking water and carbon dioxide, ensuring that the drinking water is first saturated at a maximum 8 deg C to a CO₂ content of at least 10 g/l, the grape wine with a CO₂ content of 2 g/l is introduced into a bottle, at a temperature of 8 to 10 deg C, and then, after pre-stressing the bottles with CO₂, the saturated drinking water is added to the bottle; it is kept under pressure until the liquid comes to a rest and finally the bottle is sealed.

2. In carrying out the process as per the requirement criterion 1, we use special filling nozzles to introduce the grape wine into the bottle and to fill it with the saturated drinking water.

3. In carrying out the process as per the requirement criteria 1 or 2, we ensure that the drinking water and the grape wine are domesticated and saturated in a tank with a cubic capacity corresponding to the number of bottles to be filled and to the cubic capacity of the bottle, and then the drink mix is rested and finally bottled.
